# EUROPÄISCHE PATENTSCHRIFT

(11) **EP 0 998 700 B1**
(45) Veröffentlichungstag und Bekanntmachung des Hinweises auf die Patenterteilung: **27.08.2003**
(21) Anmeldenummer: 99936243.7
(22) Anmeldetag: 12.05.1999
(51) Int. Cl.: G05D 1/02

(54) **VERFAHREN ZUR GENERIERUNG VON ANKOPPLUNGSBAHNEN, VERWENDBAR ZUR FÜHRUNG EINES FAHRZEUGS ZU EINER VORGEGEBENEN ZIELBAHN**
METHOD FOR GENERATING CONNECTING PATHS WHICH CAN BE USED FOR GUIDING A VEHICLE TO A PREDETERMINED TARGET PATH
PROCEDE POUR LA GENERATION DE TRAJECTOIRES D'ACCOSTAGE, UTILISABLE POUR LE GUIDAGE D'UN VEHICULE VERS UNE TRAJECTOIRE CIBLE PREDEFINIE

(30) Priorität: 19.05.1998 DE 19822508
(43) Veröffentlichungstag der Anmeldung: 10.05.2000
(73) Patentinhaber: EADS Deutschland GmbH, 81663 München (DE)
(72) Erfinder: BAUMGARTEN, Götz, D-85579 Neubiberg (DE)
(86) Internationale Anmeldenummer: DE9901446
(87) Internationale Veröffentlichungsnummer: WO99060455

(56) Entgegenhaltungen:
- EP-A- 0 448 060
- DE-A- 4 209 457
- GB-A- 2 309 556
- US-A- 5 233 526
- US-A- 5 350 912
- US-A- 5 684 696
- US-A- 5 752 207

## Beschreibung

Die Erfindung betrifft ein Verfahren zur Generierung von Ankopplungsbahnen, das verwendbar zur Führung eines Fahrzeugs zu einer vorgegebenen Zielbahn ist, und ein Bahngenerierungssystem zur Durchführung dieses Verfahrens.

Bei der automatischen Bahnrührung von Fahrzeugen, bei der das Fahrzeug automatisch mit Hilfe von Sensoren entlang einer beliebigen, mehrdimensionalen Zielbahn geführt wird, ist das Fahrzeug häufig in einem vorangehenden Schritt erst an diese Zielbahn hinzuführen. Dies kann zum einen durch manuelle Steuerung des Fahrzeugs von der aktuellen Position an die Zielbahn mit und ohne Vorgaben oder durch eine automatische Hinführung an die Zielbahn erreicht werden. In beiden Fällen ist jedoch eine Ankopplungsbahn erforderlich, entlang der das Fahrzeug von der Ist-Position ohne Überschiessen an die Zielbahn geführt wird, wobei insbesondere der Eintritt in die Zielbahn im Bereich der Steuerbarkeit des Fahrzeugs liegen muß.

Aus der Luftfahrt sind Ankopplungsbahnen bekannt, die das Flugzeug automatisch auf eine geradlinige Ziel- oder Sollflugbahn bringen.

Weiterhin wurden Bahngenerierungssysteme zur Erzeugung von Ankopplungsbahnen an gekrümmte Zielbahnen entwickelt. Die Generierung der Ankopplungsbahn erfolgt dabei durch Zuammensetzen der Ankopplungsbahn aus geometrischen Bahnelementen. Ein Nachteil dieses Verfahrens ist, daß dieses Verfahren einen verhältnismäßig großen Rechen- und damit Geräteaufwand erforderlich macht, wenn sichergestellt werden soll, daß das Verfahren für jede beliebige Anfangs-Bewegungsrichtung und -Position jeweils relativ zur Zielbahn eine Ankopplungsbahn generieren kann. Ein weiterer Nachteil ist, daß bei diesem Stand der Technik die gesamte Ankopplungsbahn bis zur Einmündung in die Zielbahn generiert werden muß, bevor sich das Fahrzeug selbst in der Ankopplungsphase befindet, da nur dann sichergestellt werden kann, daß die Ankopplungsbahn effizient ist.

Es ist eine Aufgabe der Erfindung, ein Verfahren und ein System zur Generierung von effizienten, von beliebigen Ausgangssituationen ausgehende Ankopplungsbahnen an beliebige, vorgegebene Zielbahnen zu schaffen, die zwar innerhalb der physikalischen Grenzen des Fahrzeugs liegen, ansonsten jedoch vom Fahrzeug unabhängig sind, wobei der Rechen- und damit der Geräteaufwand möglichst gering sein sollen. Insbesondere soll die generierte Ankopplungsbahn knickfrei sein und die Leistungs- und Belastungsgrenzen des Fahrzeugs (z.B. Querbeschleunigungsgrenzen) beachten. Eine Aufgabe der Erfindung ist auch, ein Verfahren bzw. ein Bahngenerierungssystem zur Erzeugung von Ankopplungsbahnen zu schaffen, bei dem die Ankopplungsbahnen ohne Überschiessen in die Zielbahnen übergehen.

Eine weitere Aufgabe der Erfindung ist, ein Verfahren bzw. ein System zur Generierung von Ankopplungsbahnen für insbesondere beliebig gekrümmte, ein- oder mehrdimensionale Zielbahnen zu schaffen, die auch mit entlang ihres Verlaufs veränderlichen Bewertungsfaktoren oder Parametern zur Berücksichtigung von z.B. zeitlichen Gesichtspunkten oder bevorzugten Ankopplungsbereichen versehen sind.

Diese Aufgabe wird mit den Merkmalen des kennzeichnenden Teils des Anspruchs 1 gelöst. Weitere Ausführungsformen der Erfindung sind in den Unteransprüchen angegeben.

Die geometrischen Verhältnisse der Ankopplungsbahn, die unabhängig vom Fahrzeug sind, werden dabei auf ein dynamisches Modell abgebildet. Dieses Modell wird unter Vorgabe eines Regelungsziels geregelt. Das Regelungsziel kann dabei durch die Maßgabe, den Abstand der Ankopplungsbahn zur Zielbahn auf den Wert Null zu bringen, oder eine ähnliche Maßgabe beschrieben sein.

Ein Vorteil der Erfindung ist, daß die Bahngenerierung genauso getaktet ist wie die dieser nachgeschalteten Bahnregelung, so daß die Bahngenerierung die errechneten diskreten Ankopplungsbahnpunkte an die Bahnregelung in der Taktrate bereitstellt, in der die Bahnregelung diese benötigt.

Ein weiterer Vorteil der Erfindung ist, daß aus der Bahngenerierung neben den Ankopplungsbahnpunkten auch noch weitere Signale wie z.B. der Bahnwinkel der Ankopplungsbahn oder die Querbeschleunigung des Fahrzeugs auf der Ankopplungsbahn abgegriffen werden können. Solche zusätzlich abgegriffenen Signale können auch anderen Modulen oder Systemen, z.B. der Bahnregelung zur Verfügung gestellt werden. Mit diesen Signalen kann auch ein Vorsteuereffekt erreicht werden, mit dem die Bahnregelung erleichtert werden kann. Somit ist es auch möglich, die Ankopplungsbahn nicht in Form von Positionspunkten, sondern z.B. in Form von Datensätzen, die Richtungswinkel und Geschwindigkeiten beihalten, an die Bahnregelung abzugeben.

Auch ist es möglich, in Phasen der Ankopplungsbahngenerierung, in denen die Bahngenerierung vereinfacht ablaufen kann, ohne Sicherheitseinbuße entsprechende Teile derselben abzuschalten oder in anderen Phasen je nach Erfordernis Teile dazuzuschalten, da die Bahnregelung davon unberührt bleibt.

Dadurch, daß mit dem erfindungsgemäßen Bahngenerierungssystem Ankopplungsbahnen generiert werden können, die ohne Überschiessen in die Zielbahn einmünden, ist es insbesondere möglich, das Bahngenerierungssystem auch zur Generierung von Ankopplungsbahnen an vorgegebene oder gleichfalls generierte Tiefflugbahnen für Flugzeuge zu verwenden, da mit diesen zusammen mit einer entsprechenden Bahnregelung vermieden wird, daß das Flugzeug in Bodennähe gerät.

Im folgenden wird die Erfindung an Hand der beiliegenden Figuren beschrieben. Es zeigen:
- Figur 1 eine funktionale Darstellung des erfindungsgemäßen Bahnführungssystem mit der Bahngenerierung und der Bahnregelung,
- Figur 2 ein funktionales Schema der erfindungsgemäßen Bahngenerierung,
- Figur 3 eine beispielhafte Darstellung einer horizontalen Zielbahn sowie der dazu ermittelten Ankopplungsbahn,
- Figur 4 eine beispielhafte Darstellung einer nur in ihrem Höhenverlauf festgelegten Zielbahn sowie der dazu ermittelten Ankopplungsbahn,
- Figur 5 die Struktur der erfindungsgemäßen Bahngenerierung für einen Anwendungsfall, bei dem eine in der vertikalen Ebene verlaufende Ankopplungsbahn an eine als Höhenverlauf gegebene Zielbahn generiert wird, und
- Figur 6 die Struktur der erfindungsgemäßen Bahngenerierung für einen weiteren Anwendungsfall, bei dem eine in der horizontalen Ebene verlaufende Ankopplungsbahn an eine ebenfalls in der horizontalen Ebene verlaufende Zielbahn generiert wird.

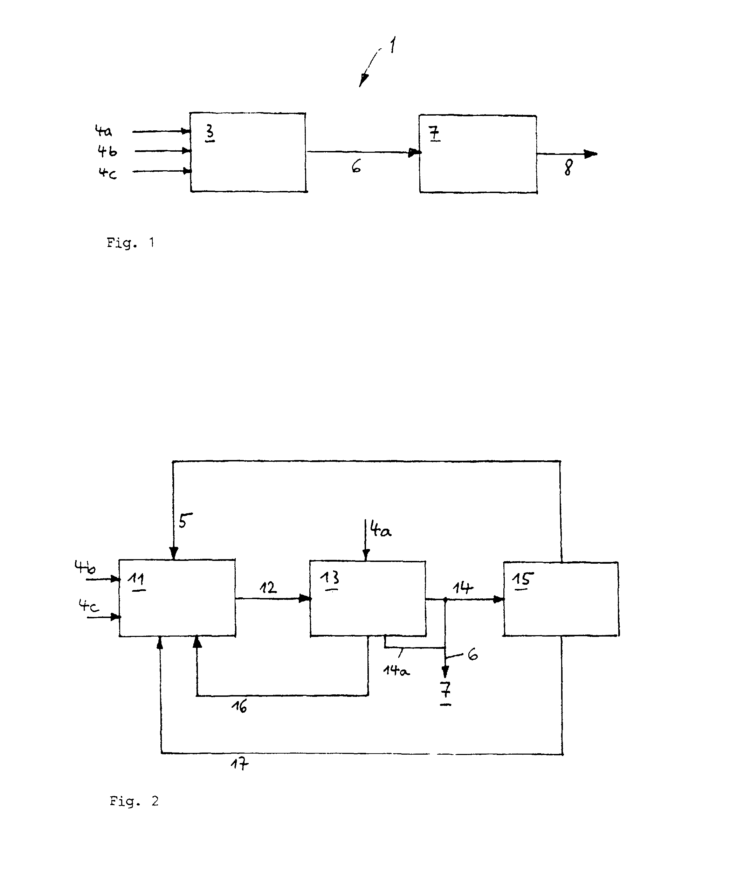

Die Figur 1 zeigt ein Bahnführungssystem 1 mit einem Bahngenerierungsmodul oder einer Bahngenerierung 3 und einem Bahnregelungsmodul oder einer Bahnregelung 7. Die Bahngenerierung 3 umfaßt Module zur Durchführung mindestens einer Betriebsart, mit der unter Randbedingungen, die mit der Betriebsart vorgegeben sind, zumindest eine Ankopplungsbahn an eine ebenfalls vorgegebene Zielbahn ermittelt wird. Die Bahngenerierung 3 erhält als manuell oder von anderen Modulen zugeführte Eingangsgrößen Initialisierungsgrößen 4a, und zwar vorzugsweise Zustandsgrößen des Fahrzeugs, gegebenenfalls eine Betriebsartvorgabe 4b, wenn die Bahngenerierung mehr als eine Betriebsart umfaßt, sowie je nach Betriebsart erforderliche Zielbahn-Sollvorgaben 4c. Diese Daten 4a, 4b, 4c können alternativ auch während des Prozesses der Bahngenerierung 3 von einem anderen, mit der Bahngenerierung 3 verbundenen Modul derselben zugeführt werden. Als Ausgangsgrößen schickt die Bahngenerierung 3 Ankopplungsbahndaten 6 an die Bahnregelung 7. Die Bahnregelung 7 hat die Funktion, das Fahrzeug auf der ermittelten Ankopplungsbahn auch unter dem Einfluß von äußeren, auf das Fahrzeug wirkenden Störgrößen zu halten. Die Bahnregelung 7 schickt wiederum Stellgrößen 8 als Ausgangsdaten an die in den Figuren nicht dargestellten Stellsysteme zur Manövrierung des Fahrzeugs entlang der erfindungsgemäß ermittelten Ankopplungsbahn.

Figur 2 stellt die erfindungsgemäße Bahngenerierung 3 dar. Diese umfaßt eine Regelungseinrichtung oder eine Bahndynamikregelung 11, die Daten 12 an eine Bahndynamik oder eine Bahndynamikeinheit 13 abgibt, von der wiederum Daten 14 an eine Einrichtung zur Berechnung von Zielbahndaten oder ein Umrechnungsmodul 15 geschickt werden. Von der Bahndynamikeinheit 13 werden Rückführungsdaten 16 und vom Umrechnungsmodul 15 werden Rückführungsdaten 17 an die Bahndynamikregelung 11 geschickt. Als Eingangsgrößen empfängt die Bahndynamikregelung 11 von einem Modul außerhalb des Bahnführungssystems 1 gegebenenfalls die Betriebsartdaten 4b sowie die Zielbahn-Sollvorgaben 4c, und von dem Umrechnungsmodul 15 die Zielbahndaten 5. Die Bahndynamik 13 empfängt neben den von der Bahndynamikregelung 11 kommenden Daten 12 die Initialisierungsgrößen 4a, wobei letztere zu Beginn des Bahngenerierungs-Prozesses auch der Regelungseinrichtung 11 oder auch dem Umrechnungsmodul 15 zugeführt werden können. Die Daten 6, die zur Bahnregelung gehen, können sich aus des Daten 14 für das Umrechnungsmodul und/oder anderen Daten 14a aus der Bahndynamik zusammensetzen.

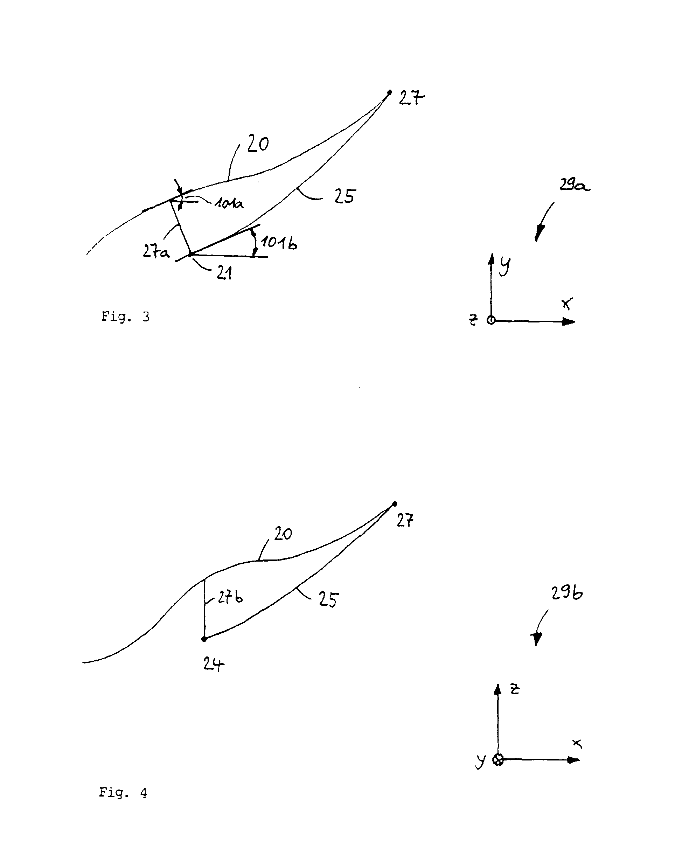

In Figur 3 ist eine in einer horizontalen Ebene verlaufende Zielbahn 20 und die zu Beginn des Bahngenerierungs-Prozesses mit Hilfe einer Sensorik nach dem Stand der Technik ermittelte momentane Ist-Position 21 des Fahrzeugs dargestellt, die in einem Abstand 27a von der Zielbahn 20 gelegen ist. Mit dem Bezugszeichen 29a ist ein ortsfestes Koordinatensystem mit den Koordinaten x, y, z bezeichnet, auf die sich die geometrischen Rechengrößen der Bahngenerierung 3 beziehen können. Die Bahngenerierung 3 errechnet aufgrund der entsprechenden Betriebsart-Auswahl eine ebenfalls in der horizontalen Ebene verlaufende Ankopplungsbahn 25, die im Einmündungspunkt 27 in die Zielbahn 20 einmündet.

In der Figur 4 ist ein Beispiel für eine eindimensionale Zielbahn und Ankopplungsbahn gezeigt, wobei die zu den in der Figur 3 gezeigten analogen Angaben mit denselben Bezugszeichen versehen worden sind. Der in der Figur 4 gezeigte Höhenverlauf ist die vor dem Bahngenerierungs-Prozeß bekannte und der Bahngenerierung 3 in entsprechenden Daten zuzuführende Zielbahn 20, an die ein Flugzeug mit einer Ausgangs-Höhe 24 entlang der zu errechnenden Ankopplungsbahn 25 aufgrund der entsprechend angewählten Betriebsart hinzuführen ist. Der anfangs bestehende Höhenabstand ist mit dem Bezugszeichen 27b bezeichnet. Mit dem Bezugszeichen 29b ist ein für diesen Anwendungsfall geeignetes Koordinatensystem bezeichnet.

Die Initialisierungsgrößen 4a, die insbesondere zur Initialisierung der Bahndynamik 13 benötigt werden, sind Ist-Größen oder Zustandsgrößen des Fahrzeugs bei Beginn des Bahngenerierungs-Prozesses und können beispielsweise die horizontale Position, die momentane Höhe über Grund oder eine Richtungs-Größe umfassen, sowie eine Kombination dieser Größen und eine Kombination dieser Größen mit anderen Größen. Diese werden mittels einer nicht dargestellten Sensorik nach dem Stand der Technik zu Beginn des Bahngenerierungs-Prozesses bestimmt oder liegen zu diesem Zeitpunkt auf andere Weise vor. Die Initialisierungsgrößen 4a benötigt die Bahndynamik 13 vor dem Prozeß der Bahngenerierung, da Funktionen der Bahndynamik 13, wie z.B. Integratoren, für den Generierungsprozeß Anfangswerte benötigen. Es hängt von der Betriebsart bzw. der Ausführungsform der Bahngenerierung 3 ab, welche Ist-Koordinaten und in welcher Form diese von dem Bahndynamik 13 benötigt werden. In einer Ausführungsform einer Bahngenerierung 3 für eine Ankopplungsbahn 25 nach der Figur 3 können die geforderten Initialisierungsgrößen 4a in der Ist-Position in Form der entsprechenden x-y-Koordinaten, der Geschwindigkeit sowie einer momentanen Fahrtrichtung des Fahrzeugs in der x-y-Ebene bestehen.

Die Zielbahndaten 5, die vom Umrechnungsmodul 15 an den Bahndynamikregler 11 geschickt werden, sind Daten, die den momentanen Verlauf desjenigen Punktes bzw. Bereichs der Zielbahn 20 beschreiben, der für den jeweiligen Iterationsschritt oder Bahngenerierungs-Zyklus relevant ist. Welcher Punkt bzw. Bereich in einem Zyklus des Bahngenerierungs-Prozesses relevant ist, hängt davon ab, wie in einer Betriebsart der Bahngenerierung 3 der Abstand 27a, 27b der Ist-Position 21 von der Zielbahn 20 im jeweiligen Iterationsschritt definiert ist, oder von anderen Gesichtspunkten, wie z.B. Vorgaben in Bezug auf den möglichen Einmündungspunkt. Die Zielbahndaten 5 können die jeweilige Zielbahn-Koordinate sowie deren erste, zweite und weitere Ableitung bzw. Ableitungen nach der Bogenlänge im betreffenden Ankopplungsbahn-Bereich umfassen, also z.B. die Richtung und Krümmung der Zielbahn 20 in dieser Koordinate, sowie daraus abgeleitete Größen einschliessen. Anstatt Ableitungen nach der Bogenlänge können dies auch Ableitungen nach Bahnspuren in bestimmten Koordinatenebenen (z.B. Flugspur in der x-y-Koordinatenebene) oder Ableitungen in bestimmten Koordinatenachsen oder ähnliches sein. Als abgeleitete Größen kommen für die genannten Größen vorzugsweise die entlang der Zielbahn 20 gegebenenfalls veränderlichen, beispielsweise jeweils querzur Zielbahn-Richtung definierten Geschwindigkeits- oder Querbeschleunigungskomponenten des Fahrzeugs auf dem entsprechenden Zielbahnbereich in Betracht, die über eine gemessene oder angenommene Geschwindigkeit des Fahrzeugs abgeleitet werden können. Welche Zielbahndaten 5 vom Umrechnungsmodul 15 an den Bahndynamikregler 11 geschickt werden, hängt nicht nur von der gewählten Betriebsart ab, sondern auch von dem Bereich, für den im jeweiligen Iterationsschritt die Ankopplungsbahn-Punkte errechnet werden. So werden in der Endphase der Ermittlung der Ankopplungsbahn 25 im Normalfall sämtliche Daten der Rückführungen 16, 17 sowie sämtliche zur Verfügung stehende Zielbahndaten 5 im Bahndynamikregler 11 verarbeitet. Dagegen werden möglicherweise in der Anfangsphase der Ankopplungsbahn-Ermittlung bei einer verhältnismäßig großen Entfernung des Fahrzeugs von der Ankopplungsbahn 25 vom Bahndynamikregler 11 von den Zielbahndaten 5 nur eine Untermenge der gesamten Zielbahndaten, wie z.B. die Zielbahn-Koordinaten und deren erste Ableitung, die Zielbahnrichtung, nicht aber deren zweite Ableitung verwendet.

Die Bahndynamik 13 bewirkt in jedem Iterationsschritt aus den Daten 12, die die Eingangsdaten der Bahndynamik 13 bilden, die Ermittlung Ankopplungsbahn-spezifischer Geometrie-Daten 14, z.B. in Form der Koordinaten des in einem Iterationsschritt errechneten Ankopplungsbahn-Punkts. Die Eingangsdaten 12 der Bahndynamik 13 sind je nach Anwendungsfall und Betriebsart zu definieren. Beispielsweise ist dafür die Querbeschleunigung des Fahrzeugs vorgesehen. Die Bahndynamik 13 umfaßt vorzugsweise Integratoren, mit denen die Daten 12 zu Daten 14 aufintegriert werden, die den jeweils zu ermittelnden Ankopplungsbahn-Koordinaten entsprechen. Die Bahndynamik 13 kann weiterhin ein oder mehrere Verstärker- und Begrenzungsglieder sowie noch weitere Komponenten umfassen. Mit den Begrenzungsgliedern können physikalische Grenzen des Fahrzeugs in der Ankopplungsbahn 25 berücksichtigt werden.

In jedem Iterationsschritt der Bahngenerierung 3 wird zumindest ein Satz von Ankopplungsbahn-Koordinaten ermittelt, z.B. in Form von drei Ankopplungsbahn-Koordinaten oder die erforderlichen Ankopplungs-Bahnwinkel und die Ankopplungsbahn-Geschwindigkeit oder eine andere geeignete Variablenkombination. Dies erfolgt vorzugsweise in einem Zeitraum, während sich das Fahrzeug auf der Ankopplungsbahn bewegt. Alternativ dazu könnte die Ankopplungsbahn auch erzeugt werden, bevor sich das Fahrzeug auf dieser bewegt. Dies kann zweckmäßig sein, wenn sich das Fahrzeug in diesem Zeitraum in einer fixen Lage zur Zielbahn befindet, beispielsweise bei einer stationären Lage eines Raumfahrzeugs relativ zu einer Raumstation.

Die Bahndynamikregelung 11 verarbeitet Betriebsart-Vorgaben 4b, Zielbahn-Sollvorgaben 4c, je nach Anwendungsfall Initialisierungsgrößen 4a, sowie die vom Umrechnungsmodul 15 kommenden Zielbahndaten 5 und die Rückführungsdaten 16, 17. Die Zielbahn-Sollvorgaben 4c werden vorzugsweise entweder aus dem Soll-Abstand, dem insbesondere die Größe Null zugewiesen wird, oder aus den zum Abstand 27a, 27b gehörenden Zielbahndaten gebildet. Die Zielbahndaten 5 werden festgelegt durch den für jede Betriebsart zu definierenden Abstand zwischen dem jeweiligen Ankopplungsbahnpunkt und der Zielbahn bzw. dem entsprechenden Zielbahn-Punkt oder die entsprechenden Zielbahn-Koordinaten und deren Ableitungen bzw. die sich für die angenommene Fahrzeug-Geschwindigkeit ergebende Quergeschwindigkeit und Querbeschleunigung des Fahrzeugs auf der Zielbahn. Die Rückführungsdaten 16 umfassen Ankopplungsbahn-Daten, insbesondere deren Richtung, deren Koordinaten und die Ableitung der Ankopplungsbahnrichtung, z.B. nach der Bogenlänge, und gegebenenfalls weitere Ableitungen. Die Rückführungsdaten 17 umfassen Daten, die auch Ankopplungsbahndaten enthält und zusätzlich auch auf Zielbahndaten basieren können, wie zum Beispiel der Abstand 27a, 27b des zuletzt erzeugten Ankopplungsbahnpunkts zur Zielbahn. Die Bahndynamikregelung 1 kann ein Modul (nicht dargestellt) umfassen, das dafür sorgt, daß nur Teile dieser Daten verarbeitet werden. Die Bahndynamikregelung 11 kann weiterhin eine Vorsteuerung umfassen. Eine solche Vorsteuerung verwaltet als Vorsteuerungsdaten nur Sollvorgaben und keine Rückführungen 16, 17, also keine Informationenen über die Ankopplungsbahndaten und kann insbesondere zusätzliches Wissen über die Bahndynamik beinhalten. Die Vorsteuerungsdaten werden innerhalb der Bahndynamikregelung 11 aufbereitet oder erzeugt und an einer nachfolgenden Stelle innerhalb der Bahndynamikregelung 11 dem Regelkreis mittels einer mathematischen Operation, z.B. additiv, zugeführt.

An Hand der Figur 3 wird im folgenden die Funktionsweise des erfindungsgemäßen Bahngenerierungssystems 3 erläutert:

Zu Beginn der Bahngenerierung ist eine Zielbahn 20 vorgegeben und das Fahrzeug befindet sich in einer mit Hilfe einer nicht dargestellten Sensorik ermittelten Ist-Position 21, die in einem beliebigen Abstand von der Zielbahn 20 entfernt liegt. Davon und von weiteren Einflußgrößen abhängig wird manuell oder automatisch, soweit mehrere Betriebsarten in der Bahnführung 1 vorgesehen sind, eine bestimmte Betriebsart gewählt, z.B. bei einem Höhenverlauf als Zielbahn die Betriebsart "eindimensionale vertikale Ankopplungsbahn" oder eine Betriebsart zur Generierung einer zweidimensionalen Ankopplungsbahn 25 an eine zweidimensionale Zielbahn 20. Die Information über die Betriebsart wird dann dem Bahngenerierungssystem 3 übermittelt und vorgegeben.

Nach der Wahl einer Betriebsart kann es je nach Betriebsart erforderlich sein, ein geeignetes Regelungsziel vorzugeben. Dieses wird dann entweder vom Bahndynamikregler 11 generiert oder an diesen aufgrund einer manuellen Eingabe oder von einem entsprechenden anderen Modul an diesen geschickt. Das Regelungsziel ist bei bestimmten Betriebsarten vorzugsweise die Größe Null für den beim noch zu bestimmenden Einmündungspunkt zu erreichenden Abstand zwischen Ankopplungsbahn 25 und Zielbahn 20 oder das Regelungsziel wird durch die Koordinaten der Zielbahn 20 festgelegt, die bei der Ermittlung des Abstandes des aktuell erzeugten Ankopplungsbahn-Punkts von der Zielbahn 20 maßgebend sind.

Aufgrund der Zielbahn 20 und der Ist-Position 21 wird die relative Lage der Ist-Position 21 des Fahrzeugs in Bezug auf die Zielbahn 20, also der Abstand, ermittelt. Zur Bestimmung der relativen Lage des Fahrzeugs in Bezug auf die Zielbahn 20 wird der Abstand 27a, 27b während oder im Verlauf des Prozesses, definiert. Der Abstand 27a, 27b kann ausgehend von der Ist-Position 21 definiert sein als die Linie der kürzesten Entfernung 27a zur Zielbahn 25. Zur Ermittlung der kürzesten Entfernung 27a kann es vorgesehen sein, daß in jedem Zyklus der Abstand zwischen den Koordinaten des im vorigen Zyklus ermittelten Ankopplungsbahn-Punktes zu sämtlichen Zielbahn-Koordinaten oder einer Gruppe von Zielbahn-Koordinaten ermittelt wird, woraufhin der kürzeste Abstand sowie der entsprechende Zielbahn-Punkt oder eine Teilmenge von Zielbahn-Punkten errechnet wird. Es kann jedoch auch ein anderes Verfahren zur Definition und zur Bestimmung des jeweiligen Abstands vorgesehen sein. Beispielsweise kann es zweckmäßig sein, zur Generierung einer Ankopplungsbahn 25 an eine nur in ihrem Höhenverlauf festgelegte Zielbahn 20 den Abstand als den Höhenunterschied zwischen dem im vorigen Zyklus ermittelten Ankopplungsbahn-Punkt und dem vertikal darüberliegenden Zielbahn-Punkt zu errechnen. Es können auch andere Definitionen des Abstands 27a, 27b zweckmäßig sein, z.B. um Bereiche zu berücksichtigen, in denen die Ankopplungsbahn 25 nicht in die Zielbahn 20 einmünden soll. Außerdem ist auch in dem Fall, in dem der genannte kürzeste Abstand zwischen der Ist-Position 21 des Fahrzeugs und der Zielbahn 20 einen vorbestimmten oder in der Bahngenerierung 3 zu ermittelnden Wert unterschreitet, eine weitere Art der Abstands-Ermittlung vorgesehen: es wird dann der minimale Abstand zur Verbindungsgerade von zwei benachbarten Zielbahn-Punkten oder der Abstand zu einer Kurve, die durch die relevanten Zielbahnpunkte geht, als Abstand verwendet.

Vor dem Prozeß der Ankopplungsbahn-Generierung muß diese initialisiert werden. Dazu werden Initialisierungsgrößen 4a insbesondere an die Bahndynamik 13 oder aber auch an die Regelungseinrichtung 11 oder auch an das Umrechnungsmodul 15 geschickt. Die Initialisierungsgrößen 4a sind normalerweise Fahrzeug-Zustandsgrößen und generell Daten, die geeignet sind, die Integratoren und gegebenenfalls weitere Funktionen der Bahndynamik 13 zu initialisieren, so daß diesen Funktionen ein Wert zugewiesen wird, der für den ersten Iterationsschritt relevant ist.

Unter Verwendung der Daten der Zielbahn 20 und der Ist-Position 21 generiert das Bahngenerierungssystem 3 mit einer vorgegebenen Schrittweite eine Ankopplungsbahn 25. Als Schrittweite ist beispielweise eine Zeit-Schrittweite vorgesehen, die der Taktrate des Rechners für die Bahnregelung entspricht. Dabei werden in jedem Rechenzyklus zunächst die für den jeweiligen Zyklus vorgesehen Zielbahndaten 5 und Rückführungsdaten 16, 17 im Bahndynamikregler 11 verarbeitet. Die dem Bahndynamikregler 11 zugeführten Zielbahndaten 5 werden im Umrechnungsmodul 15 berechnet, das heißt insbesondere in die für den Bahndynamikregler erforderlichen Geometrie-Daten umgeformt. Die im Bahndynamikregler 11 ermittelten Daten 12 werden der Bahndynamik 13 zugeführt und mittels der Bahndynamik 13 zu Daten 14 verarbeitet. Im jeweiligen Zyklus entsprechen die Daten 14 den an die Bahnregelung 7 zu schickenden Ankopplungsbahn-Koordinaten 6.

Welche Zielbahndaten 5 vom Umrechnungsmodul 15 und welche Rückführungsdaten 16, 17 vom Bahndynamik 13 bzw. dem Umrechnungsmodul 15 an den Bahndynamikregler 11 geschickt werden bzw. von diesem verarbeitet werden, hängt zum einen vom Anwendungsfall und zum anderen von dem Bereich der zu ermittelnden Zielbahn 20 ab. Erfindungsgemäß können jedoch je nach der Anforderung an die Bahngenerierung 3 Ableitungen sowohl bei den Zielbahndaten 5 und/oder bei den Rückführungsdaten 16, 17 Geschwindigkeits-, Beschleunigungsgrößen sowie dritte oder weitere nach der Zeit oder nach der Strecke gebildete Ableitungen der Zielbahn 20 bzw. der Ankopplungsbahn 25 zumindest zeitweise vorgesehen sein.

Unabhängig davon, ob mittels der Zielbahndaten 5 oder der Rückführungsdaten 16, 17 Geschwindigkeits-, Beschleunigungsgrößen oder Größen weiterer Ableitungen der Regelungseinrichtung 11 zugeführt werden, muß die Verarbeitung der Zielbahndaten 5 und der Rückführungsdaten 16, 17 in der Regelungseinrichtung 11 nicht immer gleichzeitig aktiv sein. In einer bevorzugten Ausführungsform der Erfindung wird die Verarbeitung dieser Daten in der Regelungseinrichtung 11 je nach dem momentanen Verlauf der Ankopplungsvorgangs aktiviert, d.h. wie die Ankopplungsbahn 25 und die Zielbahn 20 relativ zueinander verlaufen. Im Normalfall erfolgt beispielsweise die Verarbeitung der Zielbahnkrümmung als Element der Zielbahndaten 5 erst in der Endphase der Ankopplung, d.h. kurz bevor das Fahrzeug die Zielbahn 20 erreicht. Durch die Verarbeitung der Zielbahndaten 5 in der Regelungseinrichtung 11 kann erreicht werden, daß die Ankopplungsbahn 25 ohne Überschiessen in die Zielbahn 20 einmündet.

Es kann vorgesehen sein, daß mit der Bahngenerierung 3 mehrere Typen von Ankopplungsbahnen 25, z.B. neben eindimensionalen auch zwei- und dreidimensionale Ankopplungsbahnen 25 generiert werden können. Zusätzlich zu den Raumdimensionen können für die Ankopplungsbahnen auch noch weitere Dimensionen generiert werden, z.B. durch die Generierung eines zusätzlichen variablen Geschwindigkeitsverlaufs anstatt einer konstanten Geschwindigkeit. In dem bevorzugten Ausführungsbeispiel ist vor dem Generierungsprozeß die entsprechende Betriebsart zu wählen. Damit kann automatisch auch die mit der Betriebsart verbundene Zielbahn-Sollvorgabe 4c, z.B. ein Regelungsziel oder eine Sollbahn-Vorgabe generiert werden. Es kann jedoch auch vorgesehen sein, daß das Regelungsziel zusätzlich vorzugeben ist, z.B. durch eine manuelle Eingabe.

Das beschriebene System zur Generierung einer Ankopplungsbahn 25 kann im allgemeinen für jedes im Raum bewegliche Fahrzeug verwendet werden, das auf eine Zielbahn 20 geführt werden soll. Hierzu kommen neben Luftfahrzeugen auch Landfahrzeuge wie z.B. Autos sowie Schiffe oder Raumfahrzeuge in Betracht.

Die Anordnung der in den Figuren dargestellten Einheiten wie z.B. die Bahndynamikregelungseinrichtung 11, die Bahndynamik-Einheit 13 oder die Einrichtung 15 zur Berechnung von Zielbahngrößen stellt eine funktionale Anordnung dar, die unabhängig davon ist, in welchen Modulen sie auf entsprechende Rechnereinheiten implementiert wird.

Erfindungsgemäß können auch mehrere Bahngenerierungen 3 miteinander vernetzt sein und entweder zeitgleich oder in einer zeitlichen Abfolge miteinander im Austausch stehen.

Weiterhin kann die beschriebene Bahngenerierung 3 auch analog auf die Generierung von Ankopplungsbahnen mit mehr als zwei Dimensionen erweitert werden. Beispielsweise kann eine mit den drei räumlichen

Koordinaten beschriebene Ankopplungsbahn generiert werden. Außerdem kann gegenüber den räumlichen Dimensionen als weitere Dimension ein variabler Geschwindigkeitsverlauf oder Zeitverlauf generiert werden.

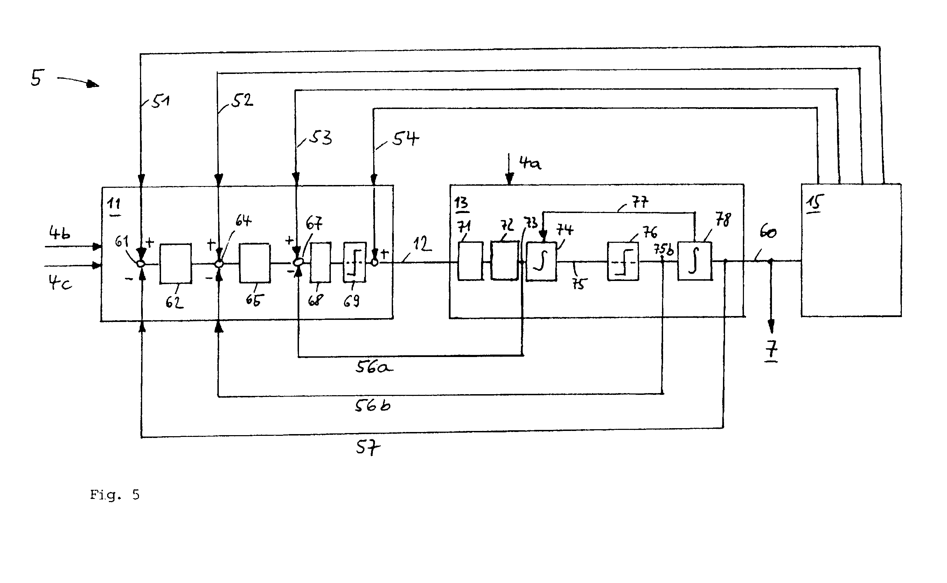

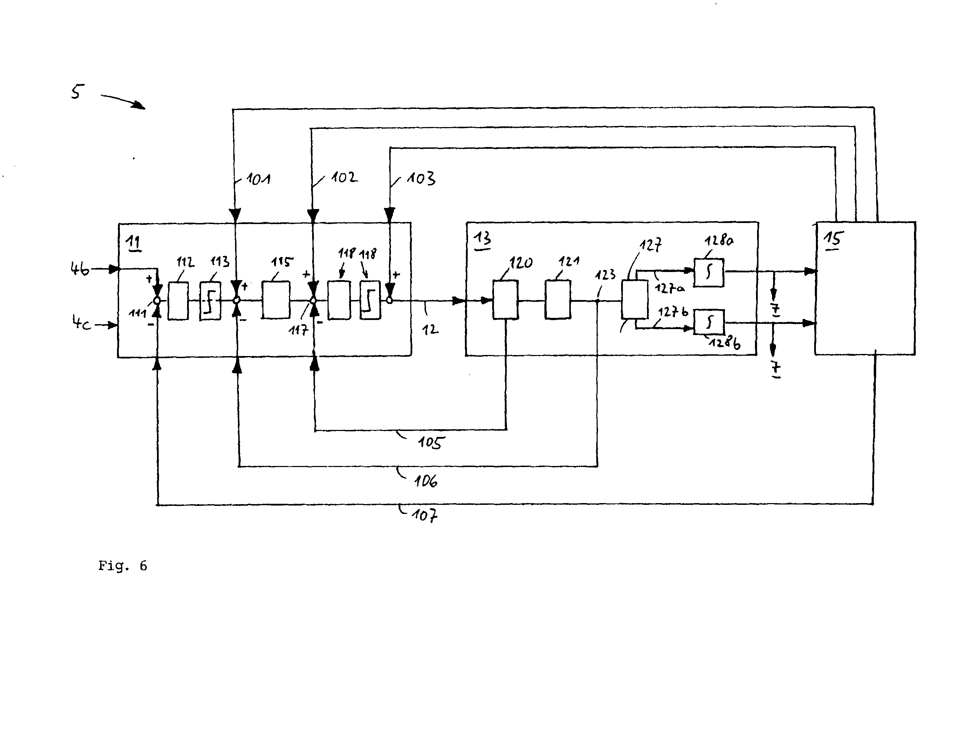

Im folgenden werden an Hand der Figuren 5, 6 Anwendungsfälle der erfindungsgemäßen Bahngenerierung 3 beschrieben, wobei Bestandteile, die den an Hand der Figuren 1 bis 4 beschriebenen Bestandteilen funktional entsprechen, diesselben Bezugszeichen haben:

In der Fig. 5 ist der Anwendungsfall beschrieben, bei dem für ein Flugzeug eine vertikale Ankopplungsbahn 25 an einen als Zielbahn 20 vorgegebenen Höhenverlauf generiert. Die Ankopplungsbahn 25 und der vorgegebene Höhenverlauf sind somit eindimensionale Bahnen.

Um den Prozeß der Bahngenerierung zu starten, erhält die Bahndynamik 13 die Initialisierungsgrößen 4a, hier konkret die Höhe zum Zeitpunkt Null sowie deren zeitliche Ableitung, und die Regelungseinrichtung 11 die Betriebsartvorgabe 4b sowie die Zielbahn-Sollvorgaben 4c.

Die vom Umrechnungsmodul 15 an die Regelungseinrichtung 11 geschickten, und für den jeweiligen Berechnungszyklus relevanten Zielbahndaten 5 können die Zielbahnposition, hier also die entsprechende Höhe des Höhenverlaufs 51, die Zielbahn-Vertikalgeschwindigkeit oder die Zielbahnrichtung beispielsweise in Bezug auf die Ankopplungsbahn 52, insbesondere die momentane Steigung der Zielbahn, die Zielbahnbeschleunigung oder die Zielbahnkrümmung 53 in Richtung der Ankopplungsbahn und die Änderung der Zielbahnbeschleunigung 54 in Richtung der Ankopplungsbahn nach der Zeit oder der Strecke umfassen, wobei je nach Betriebsart oder auch Phase des Generierungsprozesses ein oder mehrere der Daten 51, 52, 53, 54 in einem Berechnungszyklus an die Regelungseinrichtung 11 geschickt werden.

Weiterhin bilden in dem Anwendungsfall der Fig. 5 die Beschleunigungs- oder Krümmungskomponente 56a der Ankopplungsbahn 25, die Geschwindigkeitskomponente 56b der Ankopplungsbahn 25 sowie die Zielbahnhöhe 57 die Rückführung 16, die von der Bahndynamik 13 an die Regelungseinrichtung 11 geschickt werden. Die Rückführung 17, die generell neue Daten, die sowohl von der Zielbahn als auch von der Ankopplungsbahn abgeleitet werden, wie zum Beispiel der Abstand zwischen der Zielbahn und der Ankopplungsbahn, wird in diesem Fall nicht benötigt.

Die in jedem Berechnungszyklus von der Bahndynamik 13 errechneten Daten 14 werden im Anwendungsfall nach der Fig. 5 durch die Höhenkoordinaten 60 der Ankopplungsbahn 25 gebildet. Wie in der Fig. 5 dargestellt, werden die Höhenkoordinaten 60 in jedem Berechnungszyklus an die Bahnregelung 7 geschickt, mit der das Flugzeug entlang der generierten Ankopplungsbahn 25 geführt wird. Andererseits werden die Höhenkoordinaten 60 an das Umrechnungsmodul 15 weitergegeben, das u.a. mit Hilfe der Zielbahngeometrie und für den jeweiligen Berechnungszyklus maßgeblichen Flugzeugeschwindigkeit die Zielbahndaten 5 bzw. die Daten 51, 52, 53, 54 berechnet.

Die Regelungseinrichtung 11 verarbeitet in jedem Berechnungszyklus die jeweils relevante Zielbahnposition 51, von der an der Stelle oder einem Differenzpunkt oder Summierer 61 die jeweils relevante Höhe 57 der Ankopplungsbahn 25 subtrahiert wird. Hinter der Stelle 61 können Regelungsglieder nach dem Stand der Technik vorgesehen sein. Im gegebenen Anwendungsfall nach der Figur 5 ist ein Verstärker 62 vorgesehen.

Hinter dem Übertragungsglied 62 wird an einem weiteren Differenzpunkt oder Summierer 64 die Geschwindigkeitskomponente 56b der Ankopplungsbahn 25 von der Zielbahn-Vertikalgeschwindigkeit 52 subtrahiert. Anschließend wird die dann entstehende Regelgröße wiederum durch einen Verstärker 65 und gegebenenfalls durch einen Begrenzer 66 sowie je nach Anwendungsfall durch weitere Übertragungsglieder nach dem Stand der Technik verarbeitet. Das dann entstehende Signal wird an der Stelle 67 mit der Zielbahnbeschleunigung bzw. -krümmung 53 beaufschlagt und optional die Beschleunigungs- bzw. Krümmungskomponente 56a subtrahiert. Die dann entstehende Regelgröße wird durch zumindest einen Verstärker 68 und optional durch einen nachfolgenden Begrenzer 69 verarbeitet, wonach die Beschleunigungsänderung 54 addiert wird. Das dann entstehende Signal bildet die Daten 12, die die Eingangsdaten für die Bahndynamik 13 im Anwendungsfall nach der Fig. 5 bilden.

Die beschriebene Verarbeitung der Rückführungsdaten 56a, 56b, 57 und der Zielbahndaten 5 bzw. 51, 52, 53, 54 muß in jedem Zyklus nicht vollständig vonstatten gehen. Je nach Phase der Bahngenerierung können in einem Zyklus auch nur ein , zwei oder drei Zielbahndaten 51, 52, 53, 54, also eine Untermenge derselben, und ebenso eine Untermenge, z.B. nur eine der Rückführungen 16, 17 bzw. 56a, 56b, 57 an die Regelungseinrichtung 11 geschickt werden. Das Signal 56b wird dabei von einer Stelle hinter dem Begrenzer 76, von der Stelle 75b, abgegriffen werden.

Die Bahndynamik 13 kann eine optionale Beschleunigungsfilterung 71 umfassen, die die Eingangsdaten 12 integriert und einem Beschränkungsglied 72 zuführt. Mit dem Beschränkungsglied 72 können Beschleunigungsgrenzwerte in Bezug auf die Ankopplungsbahn 25 berücksichtigt werden. Das das Beschränkungsglied 72 verlassende Signal 73 wird als Beschleunigungs- bzw. Krümmungskomponente 56a der Ankopplungsbahn 25 an die Regelungseinrichtung 11 zurückgeführt. Das Signal 73 entspricht einem Quer-Beschleunigungswert der Ankopplungsbahn 25 auf der Basis einer angenommenen Flugzeuggeschwindigkeit oder einer zweifachen Ableitung der Ankopplungsbahn 25 nach der Zeit oder Strecke. Das Signal 73 wird dann innerhalb der Bahndynamik 13 mittels eines Integrators 74 integriert und dadurch zu einem Signal 75 verarbeitet, das der ersten Ableitung des Höhenverlaufs der Ankopplungsbahn nach der Zeit entspricht. Das Signal 75b wird als Geschwindigkeitskomponente 56b der Ankopplungsbahn 25 an die Regelungseinrichtung 11 zurückgeführt und andererseits einem weiteren Beschränkungsglied 76 zugeführt. Über das Beschränkungsglied 76 kann eine maximale Steiggeschwindigkeit in der Höhe, die für das Fahrzeug vorgegeben ist, in der Bahndynamik 13 berücksichtigt werden. Wenn die Begrenzung 76 wirksam wird, wird ein entsprechendes Signal 77 an den Integrator 74 geschickt, der darauf engere Beschränkungsgrenzen erhält. Das aus dem Beschränkungsglied 76 herausgehende Signal wird mittels eines weiteren Integrators 78 zu den Höhenkoordinaten 60 integriert, die einerseits an die Bahnregelung 7 und andererseits an das Umrechnungsmodul 15 geschickt werden.

Die einzelnen Funktionsglieder der Regelungseinrichtung 11 und der Bahndynamik 13 sowie die Festlegung von deren Parameter ergeben sich aus dem speziellen Anwendungsfall und auch der entsprechenden Phase. Beispielsweise ergeben sich die Parameter für die Verstärker 62 und 65 insbesondere durch zwei Forderungen: Zum einen soll die Dämpfung des Regelkreises 1 sein, um ein Überschießen der Ankopplungsbahn zu vermeiden. Zum anderen kann die Eigenfrequenz des Regelkreises festgelegt werden, wobei sich bei einer höheren Eigenfrequenz die Ankopplungsbahn 25 schneller an die Zielbahn 20 annähert. Die physikalischen Grenzen des Fahrzeugs spiegeln sich in den nichtlinearen Begrenzungen 66 und 76 wieder, die wahlweise in der Regelungseinrichtung 11 und in der Bahndynamik 13 vorgesehen werden können. Die Höhenkoordinaten 60, die an die Bahnregelung 7 geschickt werden, können beispielsweise in Form der Vertikalgeschwindigkeit 75b in Kombination mit der vorgegebenen Geschwindigkeit oder in Form von Positionsdaten für die Ankopplungsbahn 25 weitergegeben werden. Ab einem bestimmten Zeitpunkt des Ankopplungsvorgangs, d.h. wenn ein bestimmter Abstand zur Zielbahn unterschritten ist, werden alle nicht-linearen Begrenzungen unwirksam und der Regelkreis erhält lineare Eigenschaften. Dadurch und in Verbindung mit einer eingestellten Dämpfung mit dem Wert 1 wird eine Ankopplungsbahn 25 generiert, die sich auch bei einem beliebigen Krümmungsverlauf der Zielbahn 20 dieser ohne Überschießen annähert und in diese einmündet. Die Höhendifferenz oder die Differenz der Steigrate zwischen Ankopplungsbahn 25 und Zielbahn 20 sind stetig und verringern sich - wegen der Dämpfung von 1 - monoton bis auf den Wert Null. Wegen der zwei in Serie geschalteten Integratoren und bei einer Zielbahn ohne Steigraten-Sprünge hat auch die Ankopplungsbahn keine Sprünge in der Steigrate, d.h. sie ist knickfrei. Mit Hilfe einer Schranke für den Abstand zwischen Ankopplungsbahn 25 und Zielbahn 20 kann festgelegt werden, wann die Ankopplungsbahn 25 die Zielbahn 20 erreicht. Wenn dieser Zeitpunkt erreicht ist, kann die Bahngenerierung 3 abgeschaltet und die Zielbahn 20 der Bahnregelung 7 übergeben werden. Durch die Initialisierung mit den zu Beginn gemessenen Werten für die Zielbahnvorgaben 4c, im gegebenen Anwendungsfall ist dies die Höhe und Steigrate, kann erreicht werden, daß die Bahngenerierung 3 bei jeder möglichen Ausgangssituation des Fahrzeugs startbereit ist.

In der Figur 6 ist ein weiterer Anwendungsfall der erfindungsgemäßen Bahngenerierung beschrieben, bei dem eine horizontale Ankopplungsbahn 25 an eine horizontal verlaufende Zielbahn 20 generiert wird. Dieser Anwendungsfall kann sich sowohl auf Flugzeuge als auch auf Landfahrzeuge oder Schiffe beziehen. Es handelt sich bei diesem Fall um eine zweidimensionale Generierung. In der erfindungsgemäßen Bahngenerierung 3 nach der Figur 6 ist ebenfalls eine Regelungseinrichtung 11, eine Bahndynamik 13 und ein Umrechnungsmodul 15 vorgesehen, wobei Zielbahndaten 5 vom Umrechnungsmodul 15 an die Regelungseinrichtung 11 geschickt werden und wobei die Regelungseinrichtung 11 Rückführungsdaten 16 von der Bahndynamik 13 sowie Rückführungsdaten 17 vom Umrechnungsmodul 15 erhält. Zur Initialisierung des Prozesses werden der Bahndynamik 13 Initialisierungsgrößen 4a zugeführt, die unter anderem als Anfangswerte für die dort vorgesehenen Integratoren dienen. Weiterhin werden zu Beginn des Prozesses der Regelungseinrichtung 11 Betriebsartdaten 4b und Zielbahn-Sollvorgaben 4c zugeführt. Die Zielbahn-Sollvorgaben 4c erhalten im Anwendungsfall nach der Figur 6 vorzugsweise den Wert Null für den Sollabstand zwischen der Ankopplungsbahn 25 und der Zielbahn 20.

Die Zielbahndaten 5 sind im Anwendungsfall nach der Figur 6 vorzugsweise die Zielbahn-Winkelkomponente 101a im x-y-Koordinatensystem 29a (Figur 3) oder die Zielbahn-Geschwindigkeitskomponente 101 jeweils in Richtung der Ankopplungsbahn 25, die Zielbahn-Querbeschleunigungkomponente oder die Zielbahn-Krümmungskomponente 102 in Richtung der Ankopplungsbahn 25 und die Änderung der Zielbahn-Querbeschleunigungs-Komponente oder der Zielbahn-Krümmungskomponente 103 jeweils in Richtung der Ankopplungsbahn 25, wobei sich die Änderung auf die Zeit oder auf die Strecke der Zielbahn bezieht. Weiterhin wird im vorliegenden Anwendungsfall für die Rückführung 16 die Querbeschleunigung oder Krümmung 105 der Ankopplungsbahn sowie der Ankopplungsbahn-Richtungswinkel 106, im x-y-Koordinatensystem 29a mit dem Bezugszeichen 106a bezeichnet, oder die Ankopplungsbahn-Geschwindigkeit 106 beispielsweise jeweils in Richtung der Zielbahn 20 gebildet, während für die Rückführung 17 der Abstand 27a zwischen der Zielbahn 20 und der Ankopplungsbahn 107 verwendet wird, wobei der Abstand je nach Anwendungsfall und Generierungsphase zu definieren ist.

Innerhalb der Regelungseinrichtung 11 werden die Daten für den Abstand 107 von der Zielbahnvorgabe 4c an der Stelle 111 subtrahiert. Das dann entstehende Signal wird einem Verstärker 112 und danach einem Beschränkungsglied 113 zugeführt. Danach wird auf das Regelsignal der Zielbahn-Richtungswinkel 101 addiert und der Ankopplungsbahn-Richtungswinkel 106 subtrahiert. Nach einer anschließenden Bearbeitung des Regelsignals mit einem Verstärker 115 wird dem Signal die Zielbahn-Querbeschleunigungs-Komponente 102 addiert und optional die Querbeschleunigung oder Krümmung 105 subtrahiert. Anschließend kann das Regelsignal mittels weiterer Übertragungsglieder 118, z.B. einem weiteren Verstärker und Beschränkungsglied, verarbeitet werden. Abschließend wird noch optional die Änderung der Zielbahn-Querbeschleunigungs-Komponente oder der Zielbahn-Krümmungskomponente 103 addiert Dies bildet dann die Daten 12, die an die Bahndynamik 13 geschickt werden.

Die beschriebene Struktur der Regelungseinrichtung 11 kann auch mehrere Übertragungsglieder umfassen oder auch eine geringere Anzahl derselben aufweisen. Auch können zusätzlich Strukturen nach dem Stand der Technik in der Regelungseinrichtung 11 integriert sein, beispielsweise eine Vorsteuerungseinrichtung, um die Regelung zu beschleunigen.

Weiterhin müssen auch nicht alle Zielbahndaten 5 bzw. 101, 102, 103 in einem Berechnungszyklus an die Regelungseinrichtung 11 geschickt werden. Je nach Anwendungsfall und Phase des Generierungsprozesses kann keine oder eine Untermenge der Größen 101, 102, 103 der Regelungseinrichtung 11 zugeführt werden.

In der Bahndynamik 13 wird das Signal optional einer Dynamik-Einrichtung 120 und anschließend je nach Anwendungsfall weiteren Übertragungsgliedern 121 zugeführt. Das dann entstehende Signal 123 für den Ankopplungsbahn-Richtungswinkel bildet dann die Rückführungsdaten 16 bzw. die Ankopplungsbahn-Richtung bzw. - Geschwindigkeit 106, die an die Regelungseinrichtung 11 geschickt werden. Hinter dieser Abzweigungsstelle ist eine kinematische Vernetzung 127 vorgesehen. Diese verarbeitet die Ankopplungsbahn-Richtung bzw. - Geschwindigkeit 123 in Richtung der Zielbahn in die zeitlichen Ableitungen der Größen der entsprechenden zweidimensionalen Koordinaten um. In der kinematischen Vernetzung 127 werden also im wesentlichen geometrische Operationen ausgeführt. Die Daten 127a für die erste Dimension bzw. Koordinate werden in einem Integrationsglied 128a, und die Daten 127b für die zweite Dimension oder Koordinate werden einem Integrator 128b zugeführt, wodurch die Regelgrößen einen Wert erhalten, der den Koordinaten der Ankopplungsbahn entsprechen und die an die Bahnregelung 7 geschickt werden. Diese Daten werden weiterhin dem Umrechnungsmodul 15 zugeführt, das im vorliegenden Anwendungsfall die Berechnung von Abstandskomponenten, Winkelkomponenten, und Krümmungskomponenten und Querbeschleunigungs-Komponenten der Zielbahn 20 vornimmt und somit die Zielbahndaten 5 bzw. 101, 102, 103 errechnet.

Der Prozeß der Bahngenerierung erfolgt vorzugsweise in mehreren Phasen. Je nach Anwendungsfall und je nach der Phase, für die die Bahngenerierung 3 die Daten für die Ankopplungsbahn 25 generiert, können in der Regelungseinrichtung 11 und/oder im Umrechnungsmodul 15 einzelne Regelschleifen nicht betrieben werden, also z.B. keine Rückführung des Abstands 107, einzelne Zielbahndaten 5 nicht verwendet werden, z.B. keine Zielbahn-Querbeschleunigungs- bzw. - Krümmungskomponente 102.

Welche Phasen innerhalb eines Bahngenerierungsprozesses und welche Umschaltungen in eine nächste Phase vorgesehen sein können. wird im folgenden beispielhaft in Bezug auf den Anwendungsfall nach der Figur 6 beschrieben:

Die Umschaltung in die nächste Phase wird dort vorzugsweise je nach den in einem Berechnungszyklus vorliegenden Abstand zwischen den Ankopplungsbahn-Koordinaten und den Zielbahn-Koordinaten vorgenommen. Dabei wird für den Abstand vorzugsweise die kürzeste Entfernung zwischen den in einem Berechnungszyklus relevanten Koordinaten der Ankopplungsbahn 25 und der Zielbahn 20 genommen.

Die erste Phase wird dabei dann aktiviert, falls das Fahrzeug einen Abstand von größer als einen vorgegebenen Wert, z.B. 1000 m zur Zielbahn hat. In dieser ersten Phase ist die erfindungsgemäße komplette Bahngenerierung 3 nicht in Betrieb. Dagegen erfolgt nur eine Zielbahn-Richtungsregelung des Fahrzeugs, und zwar beispielsweise senkrecht auf die Zielbahn zu. Dabei wird auf die Zielbahn-Winkelkomponente 101 der Wert +/- 90 Grad addiert, die Zielbahn-Querbeschleunigungskompnnete 102 und die Rückführung 17 bzw. 107 werden nicht zurückgeführt, während die Ankopplungsbahn-Richtung 106 zurückgeführt wird.

In der zweiten Phase, die eintritt, wenn das Fahrzeug einen geringeren Abstand zur Zielbahn als der vorgebene Wert hat, schwenkt das Fahrzeug in die Richtung der Zielbahn 20 ein. In dieser zweiten Phase ist also ebenfalls die erfindungsgemäße Bahngenerierung 3 nicht vollständig in Betrieb und nur die Zielbahn-Winkelkomponente 101- allerdings ohne eine Beaufschlagung durch +/- 90 Grad - und die Ankopplungsbahn-Richtung 106 werden zurückgeführt.

Die dritte Phase beginnt dann, wenn das Fahrzeug eine Richtung eingeschlagen hat, die höchsten in einem bestimmten Winkel zu dem relevanten Abschnitt der Zielbahn 20 liegt. In diesem Fall werden zunächst die Daten 4a, 4b, 4c an die entsprechenden Module der Bahngenerierung 3 geschickt, um diese zu aktivieren. Vorzugsweise werden dann die Zielbahndaten 5 bzw. 101, 102, 103 sowie die Rückführungsdaten 16, 17 bzw. 105, 106, 107 stufenweise oder komplett zugeschaltet, wobei auch eine Teilmenge der Zielbahndaten 101,102, 103 und der Rückführungsdaten 106, 107 insgesamt zurückgeführt werden.

Die Bahngenerierung 3 arbeitet solange in der dritten Phase, bis der Abstand zwischen Ankopplungsbahn 25 und der Zielbahn 20 einen vorgegebenen Grenzwert erreicht hat. Zu diesem Zeitpunkt startet die vierte Phase des Bahn-Generierungsprozesses. In dieser Phase werden dann die Daten der Zielbahn 20 direkt an die Bahnregelung 7 geschickt, d.h. die Bahnregelung 3 kann deaktiviert werden.

Zur Erzeugung einer dreidimensionalen Ankopplungsbahn können die Bahngenerierungen nach den Figuren 5 und 6 zusammengeschaltet werden. Dabei ist ein Begrenzer 76 mit Begrenzungswerten erforderlich, durch die die Steigungen der vertikalen Komponente der Ankopplungsbahn genügend klein sind, so daß sich die Geschwindigkeit in der Horizontalspur nicht zu stark ändert. Dann kann die Geschwindigkeit in der horizontalen Ebene als konstant angenommen werden, so daß ein Zusammenschalten der beiden Bahngenerierungen nach den Figuren 5 und 6 mit verhältnismäßig geringem Änderungsaufwand erreicht wird.

Zur mehrdimensionalen Bahngenerierung, d.h. unter Berücksichtigung von mehr als einer Dimensionfür die Ankopplungsbahn, z.B. durch die Einbringung von zusätzlichen, z.B. von Geschwindigkeits- oder Beschleunigungs- Verläufen, können auch mehrere Verfahren bzw. Systeme nach den Figuren 1 und 2 oder mehrere an Hand der Figuren 5 und 6 beschriebene Ausführungsbeispiele kombiniert werden. Bei der Kombination werden insbesondere zwischen den physikalisch entsprechenden Größen Signal- und Datenflüsse hergestellt.

Es wird hervorgehoben, daß als Zielbahndaten 5 auch nur einzelne der Zielbahndaten 51, 52, 53, 54 bzw. 101, 102, 103 oder Kombinationen der in den Figuren 5 und 6 dargestellten Zielbahndaten oder mathematisch und physikalisch äquivalente Größen derselben vorgesehen sein können.

Da bei der Erfindung in der Regelungseinrichtung 11 die nicht-linearen Bestandteile in der letzten Annäherungsphase der Ankopplungsbahn 25 an die Zielbahn 20 wegfallen, kann die voranstehend beschriebene Regelungseinrichtung 11 als auf einer linearen Auslegungsmethode basierend bezeichnet werden. Eine entsprechende Struktur der Regelungseinrichtung 11 geht aus den Darstellungen der Figuren 5 und 6 hervor. Jedoch kann die Regelungseinrichtung 11 demgegenüber auch anders gebildet sein. Insbesondere kann die Regelungseinrichtung 11 auch auf nicht-linearen Auslegungsmethoden basierend ausgeführt sein, d.h. auch in der letzten Annäherungsphase der Ankopplungsbahn 25 an die Zielbahn 20 ist dann die Regelung nicht-linear.

## Patentansprüche

1. Verfahren zur Erzeugung zumindest einer Ankopplungsbahn zur Führung eines Fahrzeugs an eine vorbestimmte Zielbahn mit:
(a) einer Erzeugung von Daten (16) mittels einer Bahndynamik-Einheit (13), die in einem funktionalen Zusammenhang mit Daten der zumindest einen Ankopplungsbahn (25) stehen,
(b) einer Ansteuerung der Bahndynamik-Einheit (13) mittels einer Bahndynamik-Regelungseinheit (11),
(c) einer Übermittlung der Daten (16), die in einem funktionalen Zusammenhang mit Daten der zumindest einen Ankopplungsbahn (25) stehen, von der Bahndynamik-Einheit (13) an die Bahndynamik-Regelungseinheit (11) zur Bildung eines geschlossenen Regelkreises,
(d) einer Berechnung von Zielbahngrößen (5) in einem mit dem Ausgang der Bahndynamik-Einheit (13) in Verbindung stehenden Umrechnungsmodul (15), die aus geometrischen Eigenschaften der Zielbahn-Daten abgeleitet sind, und
(e) einer Zuführung zumindest phasenweise eines Teils der Zielbahngrößen (5) als Eingangsgrößen an die Bahndynamik-Regelungseinheit (11).

2. Verfahren nach dem Anspruch 1, **dadurch gekennzeichnet, daß** als Zielbahngrößen (5) die Zielbahn-Position (51) oder der Abstand der Zielbahn (20) von der Ankopplungsbahn (25) vorgesehen ist.

3. Verfahren nach dem Anspruch 1 oder 2, **dadurch gekennzeichnet, daß** als Zielbahngrößen (5) die Zielbahn-Winkelkomponente (101) oder die Zielbahn-Geschwindigkeitskomponente (51; 101) oder die Zielbahnrichtung (51) jeweils in Richtung der Ankopplungsbahn (25) vorgesehen ist.

4. Verfahren nach einem der voranstehenden Ansprüche, **dadurch gekennzeichnet, daß** als Zielbahngrößen (5) die Zielbahn-Beschleunigung oder die Zielbahn-Krümmung (53; 102) oder deren Komponenten in Richtung der Ankopplungsbahn (25) vorgesehen ist.

5. Verfahren nach einem der voranstehenden Ansprüche, **dadurch gekennzeichnet, daß** als Zielbahngrößen (5) eine Änderung der Zielbahn-Beschleunigung (53; 103) oder eine Änderung der Zielbahn-Krümmung (103) vorgesehen sind.

6. Verfahren nach einem der voranstehenden Ansprüche, **dadurch gekennzeichnet, daß** die mehrdimensionale Ankopplungsbahn (6, 25) in Form von Positionsdaten an eine Bahnregelung (7) geschickt wird.

7. System zur Erzeugung zumindest einer Ankopplungsbahn (25) zur Führung eines Fahrzeugs an eine Zielbahn (20), wobei das System umfaßt:
- eine Bahndynamik-Einheit (13) zur Erzeugung von Daten (16), die in einem funktionalen Zusammenhang mit Daten der zumindest einen Ankopplungsbahn (25) stehen,
- eine Bahndynamik-Regelungseinheit (11), das mit der Bahndynamik-Einheit (13) zur Regelung derselben mittels zumindest Rückführungszweigs einen geschlossenen Regelkreis bildet, wobei über den Rückführungszweig Daten (16), die in einem funktionalen Zusammenhang mit Daten der zumindest einen Ankopplungsbahn (25) stehen, zurückgeführt werden,
- ein mit der Bahndynamik-Einheit (13) verbundenes Umrechnungsmodul (15) zur Ermittlung von Zielbahn-Größen (5), die aus geometrischen Eigenschaften der Zielbahn-Daten abgeleitet sind, wobei das Umrechnungsmodul (15) einen mit dem Eingang der Bahndynamik-Regelungseinheit (11) verbundenen Ausgang zur zumindest phasenweisen Zuführung der Zielbahn-Größen (5) als Eingangsgrößen für die Bahndynamik-Regelungseinheit (11) aufweist.

8. System zur Erzeugung mehrdimensionaler Ankopplungsbahnen, bei dem mehrere der Systeme nach dem Anspruch 7 zusammengekoppelt sind.

## Claims

1. Method for generating at least one connecting path for guiding a vehicle to a predetermined target path with:
a) generation of data (16) by means of a path dynamics unit (13), which data are functionally connected to data of the at least one connecting path (25),
b) control of the path dynamics unit (13) by means of a path dynamics control unit (11),
c) communication of the data (16) that are functionally connected to data of the at least one connecting path (25) from the path dynamics unit (13) to the path dynamics control unit (11) to form a closed control loop,
d) calculation of target path variables (5) in a conversion module (15) connected to the output of the path dynamics unit (13), which variables are derived from geometrical attributes of the target path data, and
e) supplying, at least phase-wise, of a portion of the target path variables (5) as input variables to the path dynamics control unit (11).

2. Method according to claim 1, **characterized in that** the target path position (51) or the distance of the target path (20) from the connecting path (25) is provided as target path variables (5).

3. Method according to claim 1 or 2, **characterized in that** the target path angular component (101) or the target path velocity component (51; 101) or the target path direction (51) respectively in the direction of the connecting path (25) is provided as target path variables (5).

4. Method according to one of the preceding claims, **characterized in that** the target path acceleration or the target path curvature (53; 102) or their components in the direction of the connecting path (25) is provided as target path variables (5).

5. Method according to one of the preceding claims, **characterized in that** a change in the target path acceleration (53; 103) or a change in the target path curvature (103) are provided as target path variables (5).

6. Method according to one of the preceding claims, **characterized in that** the multidimensional connecting path (6, 25) is sent in the form of positional data to a path control system (7).

7. System for generating at least one connecting path (25) for guiding a vehicle to a target path (20), the system comprising:
- a path dynamics unit (13) for generating data (16) that are functionally connected to data of the at least one connecting path (25),
- a path dynamics control unit (11), which forms a closed control loop with the path dynamics unit (13) to control the same by means of at least a feedback branch, data (16) that are functionally connected to data of the at least one connecting path (25) being fed back via the feedback branch,
- a conversion module (15) connected to the path dynamics unit (13) for determining target path variables (5), which are derived from geometrical attributes of the target path data, the conversion module having an output connected to the input of the path dynamics control unit (11) for supplying the target path variables (5) at least phase-wise as input variables for the path dynamics control unit (11).

8. System for generating multidimensional connecting paths, in which several of the systems according to claim 7 are linked together.

## Revendications

1. Procédé pour la génération au moins d'ne trajectoire d'accostage, utilisable pour le guidage d'un véhicule vers une trajectoire cible prédéfinie comportant :
(a) une production de données (16), au moyen d'une unité de dynamique de trajectoire (13), qui sont dans une relation fonctionnelle avec les données de la, au moins une, trajectoire d'accostage (25),
(b) une commande de l'unité de dynamique de trajectoire (13) au moyen d'une unité de régulation (11) de la dynamique de trajectoire,
(c) une transmission des données (16) qui sont dans une relation fonctionnelle avec les données de la, au moins une, trajectoire d'accostage (25), de l'unité de dynamique de trajectoire (13) à l'unité de régulation (11) de la dynamique de trajectoire, pour la formation d'un circuit fermé de régulation,
(d) un calcul des grandeurs (5) de la trajectoire cible dans un module de conversion (15) qui est en liaison avec la sortie de l'unité de dynamique de trajectoire (13), lesquelles sont déduites des caractéristiques géométriques des données de la trajectoire cible,
(e) une amenée, au moins par phases, d'une partie des grandeurs (5) de la trajectoire cible en tant que grandeurs d'entrée dans l'unité de régulation (11) de la dynamique de trajectoire.

2. Procédé selon la revendication 1, **caractérisé en ce que** la position (51) de la trajectoire cible ou la distance entre la trajectoire cible (20) et la trajectoire d'accostage (25) est prévue comme grandeurs (5) de la trajectoire cible.

3. Procédé selon la revendication 1 ou 2, **caractérisé en ce que** la composante angulaire (101) de la trajectoire cible ou la composante de vitesse (51, 101) de la trajectoire cible ou la direction (51) de la trajectoire cible, respectivement en direction de la trajectoire d'accostage (25), est prévue comme grandeurs (5) de la trajectoire cible.

4. Procédé selon l'une des revendications précédentes, **caractérisé en ce que** l'accélération de la trajectoire cible ou la courbure (53, 102) de la trajectoire cible ou leurs composantes en direction de la trajectoire d'accostage (25) sont prévues comme grandeurs (5) de la trajectoire cible.

5. Procédé selon l'une des revendications précédentes, **caractérisé en ce qu'**une modification de l'accélération (53, 103) de la trajectoire cible ou une modification de la courbure (103) de la trajectoire cible est prévue comme grandeurs (5) de la trajectoire cible.

6. Procédé selon l'une des revendications précédentes, **caractérisé en ce que** la trajectoire d'accostage (6, 25) pluridimensionnelle est envoyée sous forme de données de position à une régulation (7) de trajectoire.

7. Système pour la production au moins d'une trajectoire d'accostage (25) pour le guidage d'un véhicule vers une trajectoire cible (20), le système comprenant :
- une unité de dynamique de trajectoire (13) pour la production de données (16) qui sont dans une relation fonctionnelle avec les données de la, au moins une, trajectoire d'accostage (25),
- une unité de régulation (11) de la dynamique de trajectoire qui forme, avec l'unité de dynamique de trajectoire (13), pour la régulation de celle-ci au moyen d'au moins une branche de retour, un circuit fermé de régulation, des données (16) qui sont dans une relation fonctionnelle avec les données de la, au moins une, trajectoire d'accostage (25) étant retournées par la branche de retour,
- un module de conversion (15) relié avec l'unité de dynamique de trajectoire (13), pour la détermination des grandeurs (5) de la trajectoire cible qui sont déduites des caractéristiques géométriques des données de la trajectoire cible, le module de conversion (15) présentant une sortie reliée avec l'entrée de l'unité de régulation (11) de la dynamique de trajectoire pour l'amenée, au moins par phases, des grandeurs (5) de la trajectoire cible en tant que grandeurs d'entrée dans l'unité de régulation (11) de la dynamique de trajectoire.

8. Système pour la production de trajectoires d'accostage pluridimensionnelles, dans lequel plusieurs des systèmes selon la revendication 7 sont couplés ensemble.
